# EUROPEAN PATENT SPECIFICATION

(11) **EP 4 284 698 B1**
(45) Date of publication and mention of the grant of the patent: **13.11.2024**
(21) Application number: 21841012.4
(22) Date of filing: 20.12.2021
(51) Int. Cl.: B62H 5/00, B62J 9/20, B62J 11/24, A42B 3/00

(54) **TOP BOX FOR HELMETS**
TOPCASE FÜR HELME
TOP CASE POUR CASQUES

(30) Priority: 29.01.2021 IT 202100001931
(43) Date of publication of application: 06.12.2023
(73) Proprietor: Givi S.p.A., 25020 Flero (BS) (IT)
(72) Inventor: VISENZI, Giuseppe, 25020 Flero, Brescia (IT)
(74) Representative: Chimini, Francesco
(86) International application number: PCT/IB2021/062021
(87) International publication number: WO 2022/162459

(56) References cited:
- EP-A1- 3 480 091
- EP-A1- 3 480 091
- WO-A1-2017/199144
- WO-A1-2017/199144

## Description

The present invention relates to a top box for cycles or motorcycles suitable for containing at least two helmets. In particular, the object of the present invention is a top box provided with a system for detecting the helmets inside it.

Cycle and motorcycle rental services, which can be managed through a software application which can be downloaded to a mobile device, such as a smartphone, are increasingly widespread, especially in cities. As is known, at the end of the rental the user must put the helmet back in the top box the cycle or motorcycle is provided with. Only after delivery of the helmet can the rental service be ended and the duration of the rental service on the basis of which the user must make the payment can therefore be calculated.

To check that the helmet is inserted in the top box at the end of the rental, it is known to provide the top box with helmet presence sensors. Examples of such sensors currently used are load cells and photocells. Unfortunately, these sensors are not sufficiently safe and helmet theft episodes frequently occur. For example, in the case of a load cell it is sufficient to insert an object, for example a stone, having a weight comparable to that of the helmet in the top box.

The document EP 3 480 091 A1 shows the features of the preamble of claim 1.

The object of the present invention is to propose a top box, a system and a method for managing a rental service capable of overcoming the aforementioned drawbacks of the devices for detecting the presence of the helmets inside the top box.

Such object is achieved with a top box according to claim 1, with a helmet according to claim 12, with a rental service management system according to claim 14 and with a management method according to claim 15. The dependent claims describe preferred or advantageous embodiments of the invention.

The features and the advantages of the top box, of the helmet, of the system and of the method according to the invention shall be made readily apparent from the following description of preferred embodiments thereof, provided purely by way of a non-limiting example, with reference to the accompanying figures, in which:

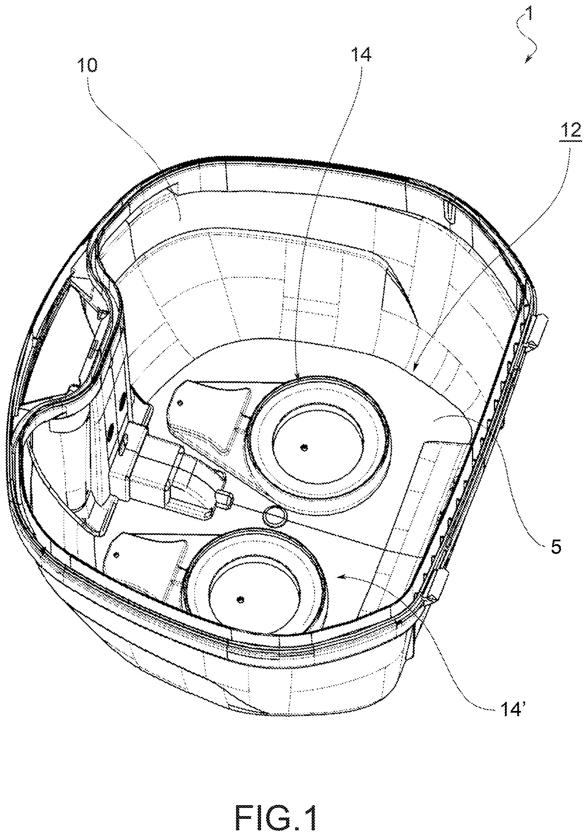

- Figure 1 is a perspective view of a top box according to the invention;

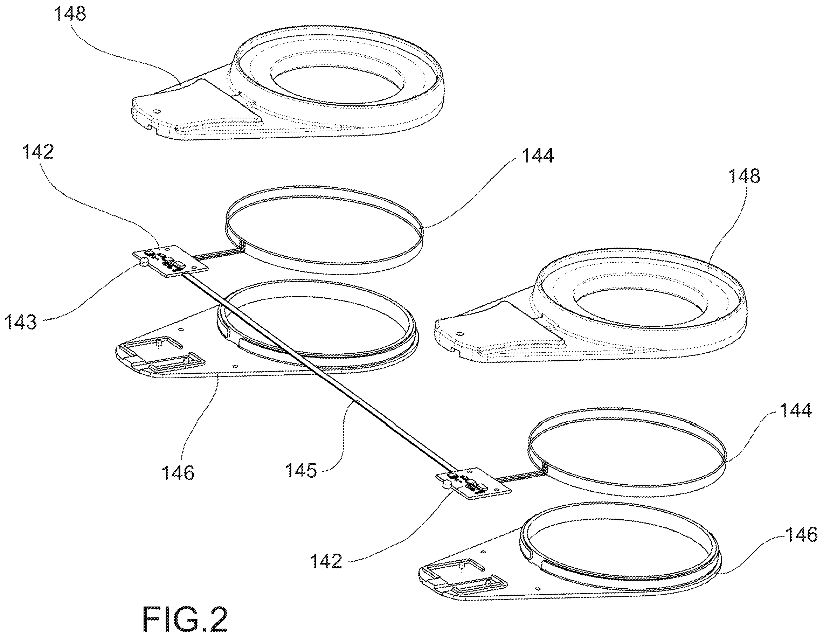

- Figure 2 is a view in separate parts of two RFID readers inserted in the top box;

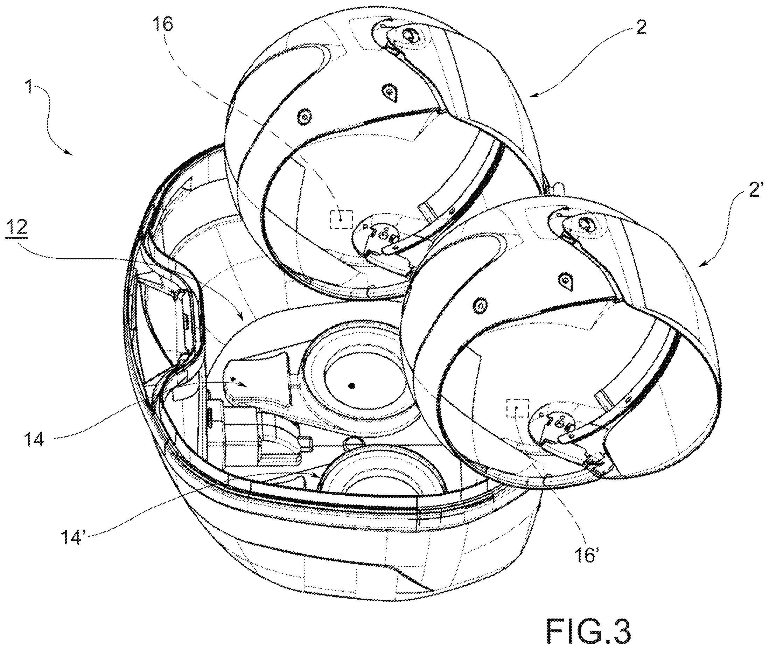

- Figure 3 shows a perspective view of the top box and a pair of helmets before their complete insertion in the top box;
- Figure 4 shows a perspective view of an open top box and a helmet while it is positioned on an RFID reader of the top box;
- Figure 5 is a plan view of the top box with a helmet positioned inside it; and

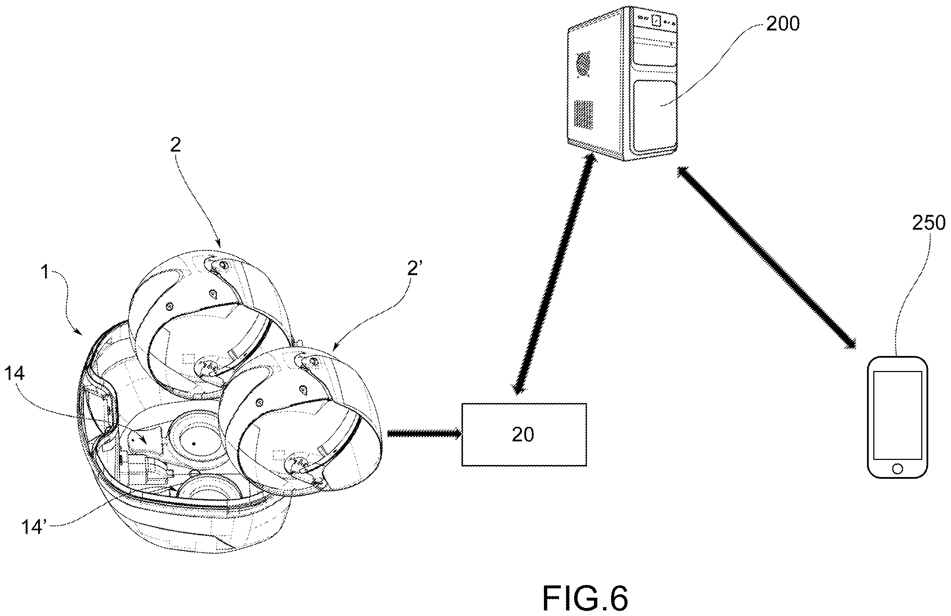

- Figure 6 is a diagram of the management system of a cycle or motorcycle rental service which uses the top box according to the invention.

In said drawings, reference numeral 1 indicates a top box for cycles and motorcycles. The top box 1 is suitable to contain two helmets 2.

In a general embodiment, the top box 1 comprises a top box body 10 defining a compartment 12 suitable to accommodate at least two helmets 2, 2'.

In the continuation of the description, for greater clarity, reference will be made to a top box for bicycles or motorcycles, for example scooters, suitable to accommodate two helmets. It is clear that the technical solutions described below can also be applied to the case of more than two helmets, for example if it is a top box for Quads or other vehicles which can be provided with larger top boxes than that of a bicycle, scooter or motorcycle.

According to an aspect of the invention, two first components 14, 14' of a pair of components 14-16, 14'-16' of a short-range wireless transceiver system, in particular a radio frequency system, are fastened in the top box body 10.

The second component 16, 16' of each pair of components 14-16, 14'-16' is fastened to the respective helmet 2, 2'.

Each first component 14, 14' is configured to transmit a helmet-present signal to a processing unit 20 when it detects the presence of a helmet 2; 2' provided with a second component 16; 16'.

In other words, a first component 14; 14' sends a helmet-present signal to the processing unit 20 when a helmet 2, 2' is stored in the compartment 12, in a position such that a second component 16; 16' is detected by the first component 14; 14'.

In one embodiment, the processing unit 20 is or forms part of the cycle' or motorcycle's electronic control unit.

Furthermore, in one embodiment, each first component 14, 14' is suitable to be powered by the cycle or motorcycle battery.

Therefore, in one embodiment, each first component 14, 14' is provided with means for connection to the electronic control unit and to the battery of the cycle or motorcycle.

In one embodiment, the short-range wireless transceiver system is a bidirectional system, wherein one of the two components emits a query signal which is received by the other of the two components, which in turn sends a response signal which is received by the first component.

In one embodiment, the first component 14, 14', when powered, emits the query signal; the second component 16, 16' is configured to be activated by the received query signal so as to generate a response signal which is detected by the first component 14, 14'.

In one embodiment, the two first components 14, 14' are identical to each other.

In one embodiment, the communication between the first component 14; 14' and the second component 16; 16' is calibrated in such a way that a second component 16; 16' can be detected by only one of the two or more first components 14; 14' fastened to a top box, in particular by the first component 14, 14' which is spatially closer to the second component 16, 16' when the helmet 2; 2' is stored in the top box.

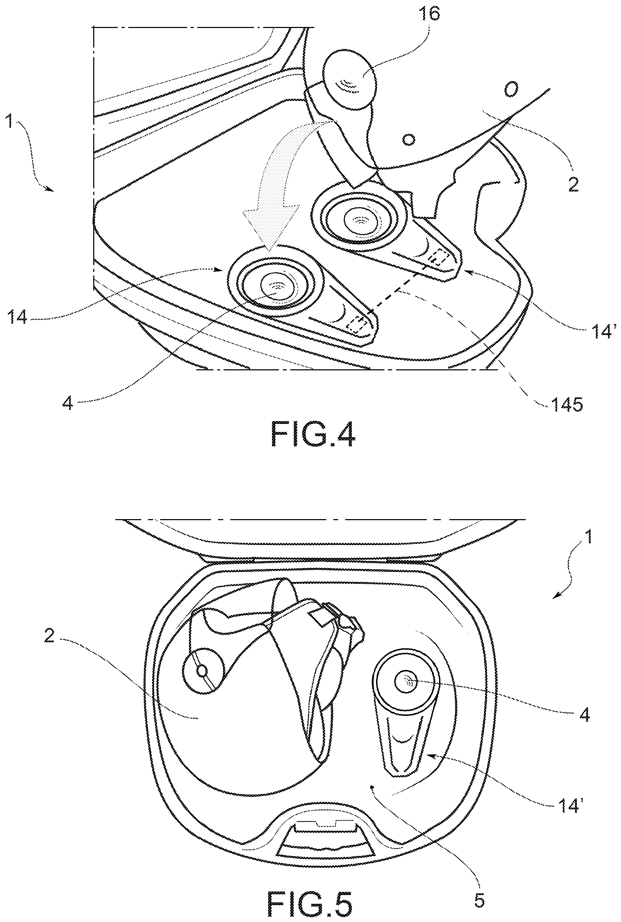

For this purpose, as exemplified in Figures 4 and 5, the top box 1 can be provided with graphic indications 4 or other guide elements suitable to indicate to the user in which position a helmet 2, 2' should be placed with respect to a first component 14, 14' so that the first component 14, 14' detects the presence of a second component 16, 16'.

In a preferred embodiment, the transceiver system uses RFID or NFC technology.

In a preferred embodiment, each first component 14, 14' is an RFID reader, also called "controller". In this case, the second component 16, 16' is an RFID tag or label attached to the helmet 2, 2'.

In one embodiment, the two first components 14, 14' are fixed side by side to a bottom wall 5 of the top box 1.

In one embodiment, each RFID reader comprises an electronic printed circuit board 142 and an antenna 144 for RFID reception. The board 142 and the antenna 144 are accommodated in a fastening base 146 positioned on the bottom wall 5. A protective cover 148 is fastened over the base 146. For example, the base 146 and the cover 148 are made of plastic material.

Therefore, the electronic components of the RFID reader are kept inside a housing formed by the base 146, suitable to contact the bottom wall 5 of the top box 1 and the protective cover 148.

In one embodiment, the bases 146 and the respective covers 148 are connected to each other and to the bottom wall 5 of the top box 1 by fixing screws.

In one embodiment, the first component 14 is provided with a light signaling device 143 which turns on when a communication is established between the first component 14, 14' and the respective second component 16, 16' of the transceiver system. Such light signal is positioned in such a way as to be visible to the user.

According to an aspect of the invention, the two first components 14, 14' are operatively connected to each other and configured in such a way that only one at a time of the two first components 14, 14', alternately with the other, can establish communication with a second component 16, 16'. In fact, it has been experimented that when the first two components 14, 14' work simultaneously, i.e. they both send a query signal suitable to be received by a second component 16, 16', electromagnetic interference is generated which disturbs the communication between a first component 14, 14' and a second component 16, 16'.

In other words, the two first components 14, 14' do not simultaneously emit a query signal for a second component 16, 16'.

In a preferred embodiment, the two first components 14, 14' emit, alternately according to a predetermined switching frequency, a query signal suitable to be received by the respective second components 16, 16'. The switching frequency is high enough not to be perceived by the user while placing one or both helmets in the top box.

In one embodiment, the two electronic boards 142 of the two first components 14, 14' are connected to each other, for example by a cable 145, so as to exchange a control signal which enables the alternate operation of the two electronic boards 142.

In one embodiment, each electronic board 142 comprises control means, for example implemented with firmware, configured in such a way that, when they detect the connection, for example by means of the cable 145, to another first component 14; 14', they enter a synchronized control mode in which they synchronize with the control means of the other first component 14; 14' so as to control the emission of the query signal alternately, for example at a predetermined switching frequency.

In one embodiment, when instead only one first component 14; 14' is installed in a top box 1, this first component 14; 14' is controlled to emit a query signal as soon as it is switched on.

In one embodiment, the compartment 12 of the top box 1 is configured to accommodate the helmets 2, 2' only in a predetermined orientation which allows the second component 16, 16' to be positioned at a minimum distance from the first component 14, 14'.

A cycle or motorcycle rental management system is also an object of the invention. The system comprises a top box 1 and two helmets 2, 2' as described above, a processing unit 20 operatively connected to the first components 14, 14'.

The processing unit 20, which, as mentioned above, can be integrated into the cycle or motorcycle control unit, is configured to receive and process a helmet-present signal transmitted by a first component 14, 14' and to send a processed helmet-present signal to a remote server.

The system also comprises a software application distributed on the remote server 200 and on a mobile device 250 of a user, wherein the software application resident on the mobile device comprises a user interface configured to request the remote server to activate a rental service and to communicate the end of the rental service to the remote server. The application residing on the remote server is configured to receive the processed helmet-present signal from the processing unit 20 and to authorize the conclusion of the rental service requested by the user only in the presence of the processed helmet-present signal.

Therefore, at the end of the rental, the user inserts the helmet or helmets used in the top box so as to activate the communication between the components of the short-range wireless transceiver system.

In one embodiment, through the mobile device, for example a smartphone on which a software application for managing the rental service is stored, the user sends the remote server a request for termination of the rental to the remote server.

In other embodiments, the rental service is automatically terminated by the remote server when it receives a helmet-present signal in the top box, without the user sending a rental termination request.

If a first component detects the presence of a second component of the transceiver system, the light signal 149 can be activated. The first component 14, 14' sends a helmet-present signal to the processing unit 20.

When the processing unit 20 has received a helmet-present signal from the first component of the helmet or helmets used, it sends a processed helmet-present signal to the remote server.

The latter, upon receipt of the helmet-present signal processed, authorizes the conclusion of the rental service.

In some embodiments, the RFID tag present on the helmet can also provide the respective RFID reader with additional information, for example data that uniquely identifies the helmet.

Below is an example of managing a motorcycle rental service using the system described above, in an embodiment which uses RFID technology.

The customer approaches an available vehicle and requests the start of the rental via a dedicated application ("app"). Following appropriate checks by the rental service server, the service is activated.

The reader devices 14, 14' are switched on and controlled to emit a query signal of the tags 16, 16'. If the top box 1 contains both helmets 2, 2', the helmet-present signals are sent to the processing unit 20 and this information is recorded.

The customer is now enabled to open the top box, remove the helmet and drive. In the driving step, the reader devices 14, 14' can be switched off.

At the end of the rental, for example following the closure of the top box cover, the reader devices 14, 14' are again switched on and controlled to send, in the manner described above, the query signal of the tags 16, 16'. The result of the query is sent to the processing unit 20 and recorded.

The data obtained at the end of the rental is then compared with the data recorded at the beginning of the rental.

The control unit 20 of the vehicle can then communicate to the server 200 of the rental company that all the conditions for the interruption of the rental are met (the top box is closed and all the helmets are inside it). The server 200 can authorize the termination of the rental service.

The customer, through the app, can now request the interruption of the rental service and then make the payment.

The reader devices 14, 14' can therefore be switched off and the vehicle parked.

The comparison step between the helmet-present signals at the end of the rental and the helmet-present signals at the beginning of the rental therefore allows understanding whether the vehicle has been left by the end user in the same conditions in which he/she found it.

It should be noted that the recording of the condition of the top box at the beginning and end of the rental, associated with the user who has requested and terminated the rental, allows the culprit of a possible theft of one or more helmets to be identified without necessarily preventing the next customer (who can still use the vehicle, if he/she finds at least one helmet in the top box) from using it.

Otherwise, if the theft occurs with the vehicle off, it will be immediately clear to the renter what happened as there will be both helmets at the end of the last rental but not at the beginning of the next one. The customer will not be able to drive and will be forced to send a report to close the start of the rental.

It should be noted that, in some embodiments and when the rental step requires it, electricity is sent to all the reader devices mounted in the top box. In fact, there is no distinction between the two reader devices on the same top box and, alternately, both emit the query signal.

Those skilled in the art may make several changes, adjustments and replacements of elements with other functionally equivalent ones to the embodiments of the invention in order to meet incidental needs, without departing from the scope of the following claims. Each of the features described as belonging to a possible embodiment may be obtained independently of the other described embodiments.

## Claims

1. A top box for cycles and motorcycles, comprising a top box body (10) defining a compartment (12) suitable to accommodate at least two helmets (2, 2'), wherein at least two first components (14, 14') of a pair of components (14-16, 14'-16') of a transceiver system are fastened in the top box body, the second (16, 16') of said pair of components being able to be fastened to a respective helmet, each first component (14, 14') being configured to transmit a helmet-present signal to a processing unit (20) when it detects the presence of a helmet (2; 2') provided with a second component (16; 16'), wherein the two first components (14, 14') are operatively connected to each other, **characterised in that** the transceiver system is a short-range wireless transceiver system and that the two first components are configured so that only one at a time can alternately establish a communication with a second component (16, 16').

2. A top box according to claim 1, wherein the first components (14, 14') are configured to alternately emit, according to a predetermined switching frequency, a query signal suitable to be received by the second components (16, 16'), the switching frequency being sufficiently high so as not to be perceivable by the user while he/she puts one or both helmets in the top box.

3. A top box according to claim 1 or 2, wherein the transceiver system uses an RFID or NFC technology.

4. A top box according to any one of claims 1 to 3, wherein each first component (14, 14') is an RFID reader provided with an antenna (144).

5. A top box according to claims 3 and 4, wherein each RFID reader comprises an electronic printed circuit board (142) and an RFID receiving antenna (144).

6. A top box according to claim 5, wherein the two electronic boards (142) of the two first components (14, 14') are connected to each other, for example by a cable (145), so as to exchange a control signal which enables the alternate operation of the two electronic boards (142) .

7. A top box according to claim 6, wherein each electronic board (142) comprises control means configured so that, when they detect the connection to the electronic board (142) of another first component (14; 14'), the control means of both first components (14, 14') enter a synchronized control mode in which they are synchronized with the control means of the other first component (14; 14') so as to alternately control the emission of the query signal.

8. A top box according to any one of claims 5 to 7, wherein each electronic board (142) and the respective antenna (144) are accommodated in a fastening base (146) located on a bottom wall of the top box, a protective cover (148) being fastened over said base.

9. A top box according to any one of the preceding claims, wherein each first component (14, 14') is provided with control unit connection means suitable to operatively connect the first component to the electronic control unit (20) of the cycle or motorcycle.

10. A top box according to any one of the preceding claims, wherein each first component (14, 14') is provided with battery connection means suitable to operatively connect the first component to the battery of the cycle or motorcycle.

11. A top box according to any one of the preceding claims, wherein the communication between the first component (14; 14') and the second component (16; 16') is calibrated so that when a helmet (2, 2') is placed in the top box, the respective second component (16; 16') can be detected only by the first component (14, 14') which is spatially closer to the second component (16, 16').

12. A helmet comprising at least a second component (16, 16') of a short-range wireless transceiver system configured to communicate with a respective first component (14, 14') of the top box according to any one of the preceding claims.

13. A helmet according to the preceding claim, wherein the second element is an RFID tag.

14. A system for managing the rental of a cycle or motorcycle, comprising a top box according to any one of claims 1 to 11, at least two helmets (2, 2') according to claim 12 or 13, a processing unit (20) operatively connected to the first components (14, 14') of the transceiver system and configured to receive and process a helmet-present signal transmitted by each first component and to send a processed helmet-present signal to a remote server, and a software application distributed on the remote server and on a mobile device of a user, wherein the software application residing on the mobile device comprises a user interface configured to request the remote server for the activation of a rental service and to communicate the end of the rental service to the remote server, and wherein the application residing on the remote server is configured to receive the processed helmet-present signal from the processing unit and to authorize the end of the rental service requested by the user only in the presence of said processed helmet-present signal.

15. A method of managing the rental of a cycle or motorcycle which employs the system according to claim 14, comprising the steps of:
- at the start of the rental, supplying and controlling the first components (14, 14') to emit a query signal of the second components (16, 16');
- sending the helmet-present signals to the processing unit (20) and recording the information;
- disabling the first components (14, 14') during the rental;
- at the end of the rental, supplying and controlling the first components (14, 14') to emit the query signal of the second components (16, 16');
- sending the helmet-present signals to the processing unit (20) and recording the information;
- comparing the information recorded at the end of the rental with the information recorded at the start of the rental;
- if said information coincides, authorizing the conclusion of the rental service.

## Patentansprüche

1. Topbox für Fahrräder und Motorräder, umfassend einen Topbox-Körper (10), der ein Fach (12) definiert, das zum Aufnehmen von zumindest zwei Helmen (2, 2') geeignet ist, wobei zumindest zwei erste Komponenten (14, 14') eines Paars Komponenten (14-16, 14'-16') eines Transceiver-Systems in dem Topbox-Körper befestigt sind, wobei die zweite (16, 16') des Paars Komponenten an einem jeweiligen Helm befestigt werden kann, wobei jede erste Komponente (14, 14') konfiguriert ist, ein Helm-vorhanden-Signal an eine Verarbeitungseinheit (20) zu übertragen, wenn sie das Vorhandensein eines Helms (2; 2') detektiert, der mit einer zweiten Komponente (16; 16') versehen ist, wobei die beiden ersten Komponenten (14, 14') operativ miteinander verbunden sind, **dadurch gekennzeichnet, dass** das Transceiver-System ein drahtloses Nahbereichs-Transceiver-System ist und dass die beiden ersten Komponenten so konfiguriert sind, dass jeweils nur eine abwechselnd eine Kommunikation mit einer zweiten Komponente (16; 16') herstellen kann.

2. Topbox nach Anspruch 1, wobei die ersten Komponenten (14, 14') konfiguriert sind, nach einer vorbestimmten Schaltfrequenz abwechselnd ein Abfragesignal zu emittieren, das von den zweiten Komponenten (16, 16') empfangen werden kann, wobei die Schaltfrequenz ausreichend hoch ist, um von dem Benutzer nicht wahrgenommen zu werden, während er/sie einen oder beide Helme in die Topbox legt.

3. Topbox nach Anspruch 1 oder 2, wobei das Transceiver-System eine RFID- oder NFC-Technologie verwendet.

4. Topbox nach einem der Ansprüche 1 bis 3, wobei jede erste Komponente (14, 14') ein RFID-Leser ist, der mit einer Antenne (144) versehen ist.

5. Topbox nach Anspruch 3 und 4, wobei jeder RFID-Leser eine elektronische Leiterplatte (142) und eine RFID-Empfangsantenne (144) umfasst.

6. Topbox nach Anspruch 5, wobei die beiden elektronischen Platinen (142) der beiden ersten Komponenten (14, 14') beispielsweise durch ein Kabel (145) miteinander verbunden sind, um ein Steuer- bzw. Regelsignal auszutauschen, das den abwechselnden Betrieb der beiden elektronischen Platinen (142) ermöglicht.

7. Topbox nach Anspruch 6, wobei jede elektronische Platine (142) Steuer- bzw. Regelmittel umfasst, die so konfiguriert sind, dass, wenn sie die Verbindung mit der elektronischen Platine (142) einer anderen ersten Komponente (14; 14') detektieren, die Steuer- bzw. Regelmittel beider ersten Komponenten (14, 14') in einen synchronisierten Steuer- bzw. Regelmodus eintreten, in dem sie mit den Steuer- bzw. Regelmitteln der anderen ersten Komponente (14; 14') synchronisiert sind bzw. werden, um die Emission des Abfragesignals abwechselnd zu steuern bzw. zu regeln.

8. Topbox nach einem der Ansprüche 5 bis 7, wobei jede elektronische Platine (142) und die jeweilige Antenne (144) in einer Befestigungsbasis (146) untergebracht sind, die sich an einer Bodenwand der Topbox befindet, wobei eine Schutzabdeckung (148) über der Basis befestigt ist.

9. Topbox nach einem der vorhergehenden Ansprüche, wobei jede erste Komponente (14, 14') mit Steuer- bzw. Regeleinheit-Verbindungsmitteln versehen ist, die geeignet sind, die erste Komponente operativ mit der elektronischen Steuer- bzw. Regeleinheit (20) des Fahrrads oder Motorrads zu verbinden.

10. Topbox nach einem der vorhergehenden Ansprüche, wobei jede erste Komponente (14, 14') mit Batterie- bzw. Akkuverbindungsmitteln versehen ist, die geeignet sind, die erste Komponente operativ mit der Batterie bzw. dem Akku des Fahrrads oder Motorrads zu verbinden.

11. Topbox nach einem der vorhergehenden Ansprüche, wobei die Kommunikation zwischen der ersten Komponente (14; 14') und der zweiten Komponente (16; 16') so kalibriert ist, dass, wenn ein Helm (2, 2') in die Topbox gelegt wird, die jeweilige zweite Komponente (16; 16') nur von der ersten Komponente (14, 14') detektiert werden kann, die räumlich näher an der zweiten Komponente (16, 16') ist.

12. Helm, umfassend zumindest eine zweite Komponente (16, 16') eines drahtlosen Nahbereichs-Transceiver-Systems, das konfiguriert ist, mit einer jeweiligen ersten Komponente (14, 14') der Topbox nach einem der vorhergehenden Ansprüche zu kommunizieren.

13. Helm nach dem vorhergehenden Anspruch, wobei das zweite Element ein RFID-Tag ist.

14. System zum Verwalten der Vermietung eines Fahrrads oder Motorrads, umfassend eine Topbox nach einem der Ansprüche 1 bis 11, zumindest zwei Helme (2, 2') nach Anspruch 12 oder 13, eine Verarbeitungseinheit (20), die operativ mit den ersten Komponenten (14, 14') des Transceiver-Systems verbunden ist und konfiguriert ist, ein von jeder ersten Komponente übertragenes Helm-vorhanden-Signal zu empfangen und zu verarbeiten und ein verarbeitetes Helm-vorhanden-Signal an einen entfernten Server zu senden, und eine Softwareanwendung, die auf dem entfernten Server und auf einer mobilen Vorrichtung eines Benutzers verteilt ist, wobei die auf der mobilen Vorrichtung befindliche Softwareanwendung eine Benutzerschnittstelle umfasst, die konfiguriert ist, den entfernten Server zur Aktivierung eines Mietdienstes aufzufordern und dem entfernten Server das Ende des Mietdienstes mitzuteilen, und wobei die auf dem entfernten Server befindliche Anwendung konfiguriert ist, das verarbeitete Helm-vorhanden-Signal von der Verarbeitungseinheit zu empfangen und das Ende des von dem Benutzer angeforderten Mietdienstes nur bei Vorhandensein des verarbeiteten Helm-vorhanden-Signals zu autorisieren.

15. Verfahren zum Verwalten der Vermietung eines Fahrrads oder Motorrads, welches das System nach Anspruch 14 verwendet, umfassend die Schritte:
- zu Beginn der Vermietung, Bereitstellen und Steuern bzw. Regeln der ersten Komponenten (14, 14') dahingehend, ein Abfragesignal der zweiten Komponenten (16, 16') zu emittieren;
- Senden der Helm-vorhanden-Signale an die Verarbeitungseinheit (20) und Aufzeichnen der Informationen;
- Deaktivieren der ersten Komponenten (14, 14') während der Vermietung;
- am Ende der Vermietung, Bereitstellen und Steuern bzw. Regeln der ersten Komponenten (14, 14') dahingehend, das Abfragesignal der zweiten Komponenten (16, 16') zu emittieren;
- Senden der Helm-vorhanden-Signale an die Verarbeitungseinheit (20) und Aufzeichnen der Informationen;
- Vergleichen der am Ende der Vermietung aufgezeichneten Informationen mit den zu Beginn der Vermietung aufgezeichneten Informationen;
- wenn die Informationen übereinstimmen, Autorisieren des Abschlusses des Mietdienstes.

## Revendications

1. Top case pour cycles et motocycles, comprenant un corps de top case (10) définissant un compartiment (12) approprié pour contenir au moins deux casques (2, 2'), dans lequel au moins deux premiers éléments (14, 14') d'une paire d'éléments (14-16, 14'-16') d'un système d'émetteur-récepteur sont fixés dans le corps de top case, le second élément (16, 16') de ladite paire d'éléments étant capable d'être fixé à un casque respectif, chaque premier élément (14, 14') étant configuré pour transmettre un signal de casque présent à une unité de traitement (20) lorsqu'il détecte la présence d'un casque (2 ; 2') doté d'un second élément (16 ; 16'), dans lequel les deux premiers éléments (14, 14') sont connectés fonctionnellement l'un à l'autre, **caractérisé en ce que** le système d'émetteur-récepteur est un système d'émetteur-récepteur sans fil à courte portée et **en ce que** les deux premiers éléments sont configurés de sorte que seul un à la fois puisse établir alternativement une communication avec un second élément (16, 16').

2. Top case selon la revendication 1, dans lequel les premiers éléments (14, 14') sont configurés pour émettre alternativement, conformément à une fréquence de commutation prédéterminée, un signal de requête approprié pour être reçu par les seconds éléments (16, 16'), la fréquence de commutation étant suffisamment élevée pour ne pas être perceptible par l'utilisateur tandis qu'il met un casque ou les deux casques dans le top case.

3. Top case selon la revendication 1 ou 2, dans lequel le système d'émetteur-récepteur utilise une technologie RFID ou NFC.

4. Top case selon l'une quelconque des revendications 1 à 3, dans lequel chaque premier élément (14, 14') est un lecteur RFID doté d'une antenne (144).

5. Top case selon les revendications 3 et 4, dans lequel chaque lecteur RFID comprend une carte (142) de circuit imprimé électronique et une antenne de réception RFID (144).

6. Top case selon la revendication 5, dans lequel les deux cartes (142) électroniques des deux premiers éléments (14, 14') sont connectées l'une à l'autre, par exemple par un câble (145), de manière à échanger un signal de commande qui permet le fonctionnement en alternance des deux cartes (142) électroniques.

7. Top case selon la revendication 6, dans lequel chaque carte (142) électronique comprend des moyens de commande configurés de sorte que, lorsqu'ils détectent la connexion à la carte (142) électronique d'un autre premier élément (14 ; 14'), les moyens de commande des deux premiers éléments (14, 14') entrent dans un mode de commande synchronisée dans lequel ils sont synchronisés sur les moyens de commande de l'autre premier élément (14 ; 14') de manière à commander alternativement l'émission du signal de requête.

8. Top case selon l'une quelconque des revendications 5 à 7, dans lequel chaque carte (142) électronique et l'antenne (144) respective sont contenues dans une base de fixation (146) située sur une paroi inférieure du top case, un cache de protection (148) étant fixé sur ladite base.

9. Top case selon l'une quelconque des revendications précédentes, dans lequel chaque premier élément (14, 14') est doté de moyens de connexion d'unité de commande appropriés pour connecter fonctionnellement le premier élément à l'unité de commande électronique (20) du cycle ou motocycle.

10. Top case selon l'une quelconque des revendications précédentes, dans lequel chaque premier élément (14, 14') est doté de moyens de connexion de batterie appropriés pour connecter fonctionnellement le premier élément à la batterie du cycle ou motocycle.

11. Top case selon l'une quelconque des revendications précédentes, dans lequel la communication entre le premier élément (14 ; 14') et le second élément (16 ; 16') est étalonnée de sorte que lorsqu'un casque (2, 2') est placé dans le top case, le second élément (16 ; 16') respectif puisse être détecté uniquement par le premier élément (14, 14') qui est plus proche spatialement du second élément (16, 16').

12. Casque comprenant au moins un second élément (16, 16') d'un système d'émetteur-récepteur sans fil à courte portée configuré pour communiquer avec un premier élément (14, 14') respectif du top case selon l'une quelconque des revendications précédentes.

13. Casque selon la revendication précédente, dans lequel le second élément est une étiquette RFID.

14. Système pour gérer la location d'un cycle ou motocycle, comprenant un top case selon l'une quelconque des revendications 1 à 11, au moins deux casques (2, 2') selon la revendication 12 ou 13, une unité de traitement (20) connectée fonctionnellement aux premiers éléments (14, 14') du système d'émetteur-récepteur et configurée pour recevoir et traiter un signal de casque présent transmis par chaque premier élément et pour envoyer un signal de casque présent traité à un serveur distant, et une application logicielle distribuée sur le serveur distant et sur un dispositif mobile d'un utilisateur, dans lequel l'application logicielle se trouvant sur le dispositif mobile comprend une interface utilisateur configurée pour demander au serveur distant l'activation d'un service de location et pour communiquer la fin du service de location au serveur distant, et dans lequel l'application se trouvant sur le serveur distant est configurée pour recevoir le signal de casque présent traité à partir de l'unité de traitement et pour autoriser la fin du service de location demandée par l'utilisateur uniquement en présence dudit signal de casque présent traité.

15. Procédé de gestion de la location d'un cycle ou motocycle qui emploie le système selon la revendication 14, comprenant les étapes consistant à :
- au début de la location, alimenter et commander les premiers éléments (14, 14') pour émettre un signal de requête des seconds éléments (16, 16') ;
- envoyer les signaux de casque présent à l'unité de traitement (20) et enregistrer les informations ;
- désactiver les premiers éléments (14, 14') durant la location ;
- à la fin de la location, alimenter et commander les premiers éléments (14, 14') pour émettre le signal de requête des seconds éléments (16, 16') ;
- envoyer les signaux de casque présent à l'unité de traitement (20) et enregistrer les informations ;
- comparer les informations enregistrées à la fin de la location avec les informations enregistrées au début de la location ;
- si lesdites informations coïncident, autoriser la conclusion du service de location.
